# EUROPEAN PATENT APPLICATION

(11) **EP 1 526 278 A1**
(43) Date of publication of application: **27.04.2005**
(21) Application number: 04077895.3
(22) Date of filing: 20.10.2004
(51) Int. Cl.: F03D 1/00, E02D 27/42

(54) **Wind turbine foundation**

(30) Priority: 21.10.2003 NL 1024581
(71) Applicant: GMB Beton- en industriebouw noord west B.V., 3752 LW Bunschoten (NL)
(72) Inventor: Jacobs, Alexandre Remedius, 6531 LA Nijmegen (NL); van den Heuvel, Antonius Joseph, 3851 PM Ermelo (NL)
(74) Representative: Winckels, Johannes Hubertus F.

(57) **Abstract**

A windmill foundation comprising a concrete main part provided with reinforcement, provided with an anchoring ring, with the aid of which a windmill can be connected to the windmill foundation, wherein the main part is substantially circularly symmetrical about a central axis extending in vertical direction and that, with respect to the central axis, the circularly symmetrical reinforcement comprises a radially extending reinforcement structure and a tangentially extending reinforcement structure.

## Description

The invention relates to a windmill foundation comprising a concrete main part provided with reinforcement, which is provided with an anchoring ring with the aid of which a windmill can be connected to the windmill foundation.

Such a windmill foundation is known from practice. Heretofore, generally, foundations for windmills are rectangular, square or of a similar configuration. Very high requirements are imposed on windmill foundations with respect to durability and strength. The known windmill foundations are connected to foundation piles whose distance to the centre of the foundation is, generally, unequal. In other words, some foundation piles are at a greater distance from the central axis of the windmill than other foundation piles. This leads to an uneven loading of the foundation piles. This uneven loading also has effects on the strength of the reinforcement structure provided in the concrete main part. With the known windmill foundations, this reinforcement structure generally consists of the known reinforcing bars or reinforcing steel mesh. The reinforcing steel mesh comprise interwoven reinforcing bars known per se, with the reinforcing bars extending perpendicularly to each other. With heavier loaded foundation piles, the reinforcement structure will have to be stronger than with less heavily loaded foundation piles. In general, this leads to considerable reinforcing structures of asymmetrical design, which entails a considerable cost price.

The object of the invention is a windmill foundation which, with the strength remaining the same, can be manufactured at a much more favorable cost price. To that end, the windmill foundation of the type described in the opening paragraph is characterized in that the main part is substantially circularly symmetrical about a central axis extending vertically, and that, with respect to the central axis, the circularly symmetrical reinforcement comprises a radially extending reinforcement structure and a tangentially extending reinforcement structure.

As the main part and, in particular, the reinforcement structures are circularly symmetrical, with considerably less concrete material and reinforcement material an equal strength can be obtained as with the windmill foundations according to the state of the art. By nature, the radially directed reinforcement structures exhibit a higher density adjacent the vertical central axis of the main part where the greater strength is required and a lower density adjacent the circumferential edge of the main part where the forces and moments to be absorbed are lesser. With a windmill foundation according to the invention, with the strength remaining the same, approximately 40% less reinforcement material can be used than with the windmill foundation according to the state of the art. Moreover, the reinforcement structure is relatively simple so that a rapid construction of the foundation is possible. Further, the reinforcement structure described lends itself eminently to standardization, so that foundations for different loads can be rapidly realized.

According to a further elaboration of the invention, the mutual distance between neighbouring tangential reinforcing bars of the reinforcement structure can be smaller between tangential reinforcing bars located closer to the vertical central axis than between the tangential reinforcing bars located further away from the vertical central axis.

This also entails that the reinforcement can be provided in a highly efficient manner, i.e. that the reinforcement structure is strong at the exact location where strength is required, this in contrast to the known windmill foundations with a non-circularly symmetrical configuration, where the construction of heavy reinforcement structures in areas where, for constructional reasons, no heavy reinforcement is required cannot be avoided, which results in an increase in costs.

According to a further elaboration of the invention, it is particularly favorable when the concrete foundation is provided with a number of foundation piles arranged in a circularly symmetrical manner relative to the central axis mentioned. It is then particularly preferred that the distance from all foundation piles to the central axis is equal. All forces to be absorbed by the foundation piles are then equally great, so that in the main part, at the location of the various foundation piles, the reinforcement structure can have a similar structure. With a circularly symmetrical reinforcement structure in the main part and a circularly symmetrical arrangement of the foundation piles, such a similar structure at the location of the foundation piles is obtained automatically.

Further elaborations of the invention are described in the subclaims and will be elucidated hereinafter by means of an exemplary embodiment, with reference to the drawing. In the drawing:
Fig. 1 shows a side view of a windmill placed on a windmill foundation;
Fig. 2 shows a cross-section of view of a windmill foundation, the cross-sectional plane comprising the vertical central axis of the windmill foundation;
Fig. 3 shows a similar cross-sectional view as represented in Fig. 2, while the reinforcement structure is visible;
Fig. 4 shows a top plan view of the reinforcement structure in which also the foundation piles are visible;
Fig. 5 shows in more detail the anchoring ring of the windmill foundation and a mast base ring connected thereto; and
Fig. 6 shows in more detail the connection between a foundation pile and the main part of the windmill foundation.

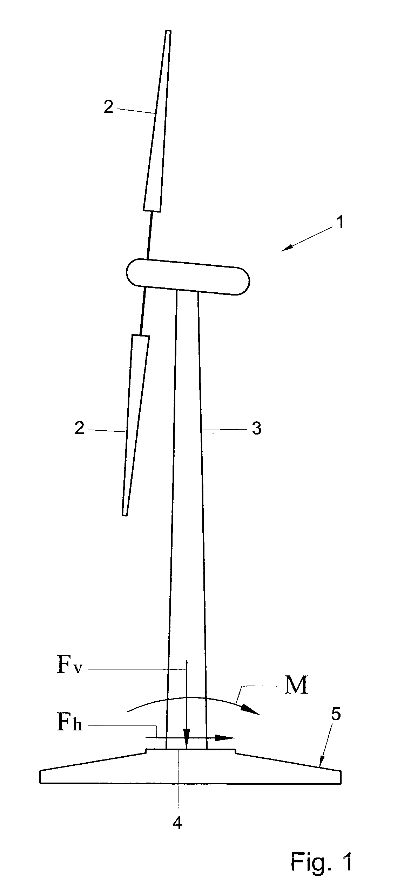

Fig. 1 shows a windmill or wind turbine 1 provided with turbine blades 2, a mast 3 which is connected, via a mast base ring 4, to the windmill foundation 5, of which only the main part 6 is schematically represented in Fig. 1. The windmill 1 supplies a vertical force Fv, a horizontal force Fh and a moment M to the windmill foundation 5. These forces and this moment vary and, what is more, their direction depends on the direction of the wind. The windmill foundation 5 must be able to resist this varying load for a great number of years.

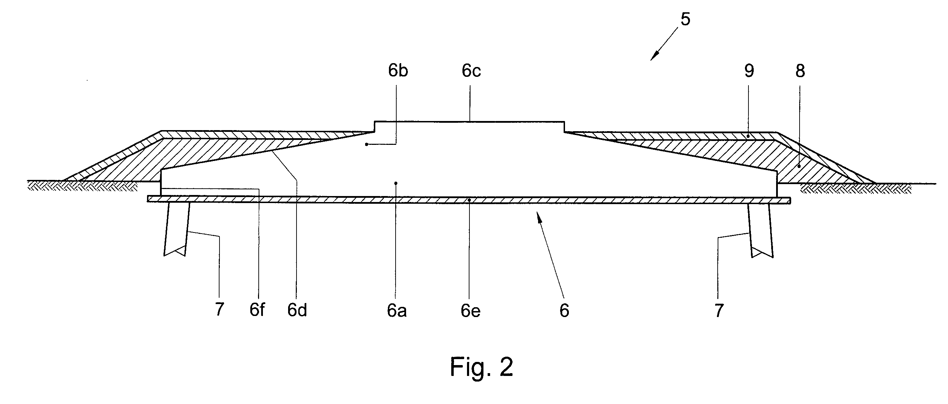

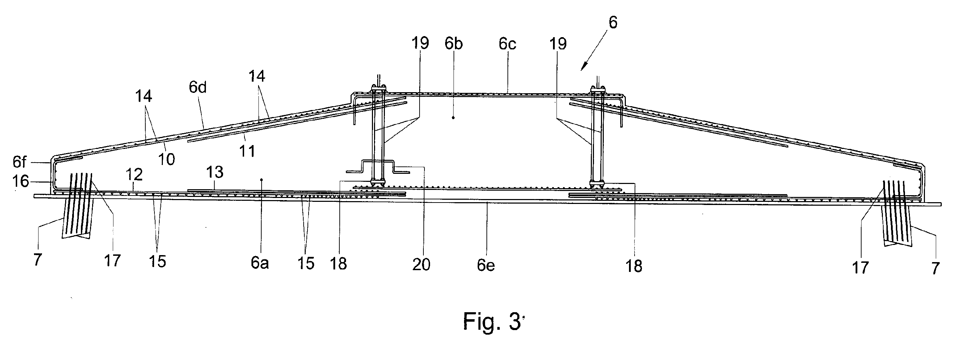

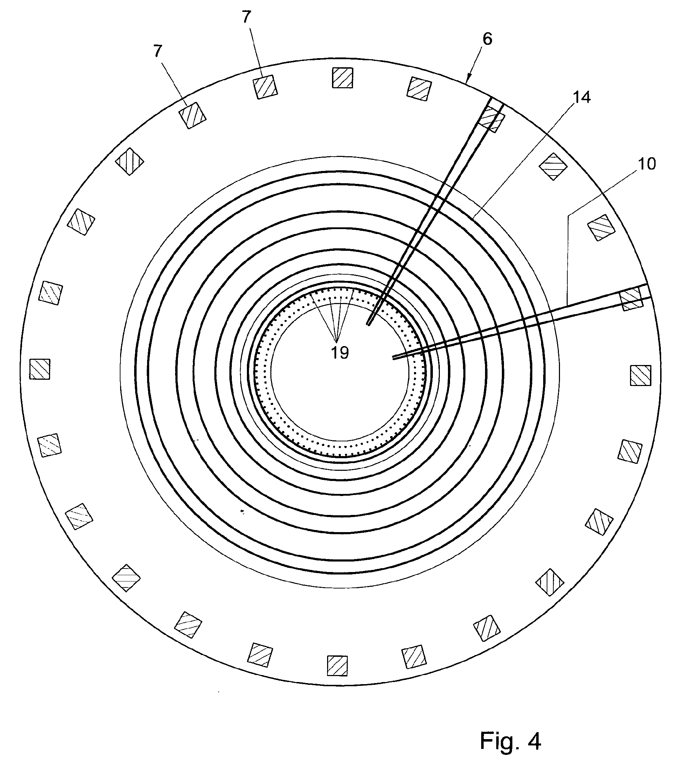

As appears from Fig. 2, the windmill foundation comprises a main part 6 which is connected to foundation piles 7. As a rule, ballast material 8 such as, for instance, sand, is poured on the circumferential edges of the main part 6, over which a layer 9 of removed earth can be provided in order to integrate the foundation 5 well in the surrounding landscape. As is clearly visible in Fig. 2, the main part 6 comprises a circular cylindrical part 6a and a frustoconical part 6b. On the circular, flat top side 6c of the frustoconical part 6b, the mast base ring 4 of the windmill 1 is mounted. The main part 6 has been manufactured from reinforced concrete. The reinforcement structure is clearly represented in Figs. 3 and 4.

Fig. 3 shows a vertical cross-section in which the vertical central axis of the windmill foundation is located. The reinforcement structure comprises radially extending reinforcing bars 10, 11, 12, 13 and tangentially extending, circular reinforcing bars 14, 15. The radial reinforcing bars 10 and 11 extend adjacent the conical upper surface 6d of the frustoconical part 6b of the main part 6. The radial reinforcing bars 12, 13 extend adjacent the bottom 6e of the circular cylindrical part 6a of the main part 6. The tangentially extending reinforcing bars 14 extend adjacent the conical upper surface 6d and the tangentially directed reinforcing bars 15 extend adjacent the bottom 6e. Adjacent the cylindrical circumferential wall 6f of the circular cylindrical part 6a, substantially U-shaped reinforcing brackets 16 are present whose legs are located adjacent the reinforcement structure near the bottom side 6e and adjacent the reinforcement structure near the conical upper surface 6d, respectively. The basis of the U-shaped reinforcement brackets 16 extends parallel to the circumferential wall 6f. The mutual distance between neighbouring tangential reinforcing bars 14, 15 is smaller adjacent the vertical central axis than adjacent the radial outside of the main part 6. Thus, it is effected that the required strength is provided exactly there, where it is required without an exaggeratedly heavy reinforcement structure being present in areas of the main part 6 where this strength is not required. Fig. 3 further shows the radial and tangential reinforcement structure also extending adjacent the circular top surface 6c of the frustoconical upper part 6b.

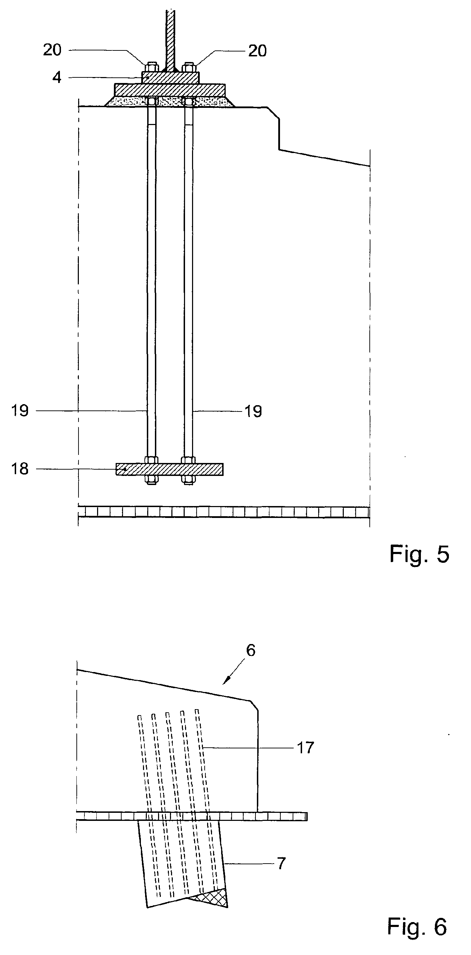

Fig. 3 and, in more detail, Fig. 6 further show that adjacent a top end, the foundation piles 7 are provided with a pile reinforcing structure 17 extending outside the pile 17. The pile reinforcing structure 17 reaches into the reinforcement structure 12, 15 of the main part 6. Thus, a firm connection between the foundation piles 7 and the main part 6 is obtained.

Fig. 3 and, in more detail, Fig. 5 show an anchoring ring 18 included in the concrete of the main part 6. Adjacent the bottom 6e of the main part 6, the anchoring ring 18 has been cast into the concrete. Anchor bolts 19 reach from the anchoring ring 18 upwards beyond a top surface 6c of the main part 6 for attachment of a mast base ring 4 of a windmill 1. The mast base ring 4 is connected to the mast 3 of the windmill 1 by way of welding. The anchor nuts 20 engaging the anchor bolts 19 are then tightened under a prescribed bias. In order to further strengthen the main part 6 at the location of the anchor bolts 19, additional reinforcing brackets 21 have been provided substantially in the centre of the main part 6 between the anchoring ring 18 and the ends of the anchor bolts 19 facing upwards, viewed in vertical direction of the main part 6.

It is clear that the invention is not limited to the exemplary embodiment described, but that various modifications are possible within the framework of the invention as defined by the claims. For instance, a second series of foundation piles can be provided, arranged in a circle with a smaller radius.

## Claims

1. A windmill foundation comprising a concrete main part provided with reinforcement, which is provided with an anchoring ring with the aid of which a windmill can be connected to the windmill foundation, **characterized in that** the main part is substantially circularly symmetrical about a central axis extending vertically and that, with respect to the central axis, the circularly symmetrical reinforcement comprises a radially extending reinforcement structure and a tangentially extending reinforcement structure.

2. A windmill foundation according to claim 1, wherein the mutual distance between neighbouring tangential reinforcing bars of the reinforcement structure is smaller between the tangential reinforcing bars located closer the vertical central axis than between the tangential reinforcing bars located further away from the vertical central axis.

3. A windmill foundation according to claim 1, wherein the concrete foundation is provided with a number of foundation piles arranged in a circularly symmetrical manner relative to the central axis.

4. A windmill foundation according to any one of the preceding claims, wherein the distance from all foundation piles to the central axis is equal.

5. A windmill foundation according to any one of the preceding claims, wherein adjacent a top end, the foundation piles are provided with a pile reinforcing structure extending outside the pile, while the pile reinforcing structure extends into the reinforcement structure of the main part.

6. A windmill foundation according to any one of the preceding claims, wherein adjacent a bottom side of the main part, the anchoring ring is cast in the concrete, while anchor bolts reach from the anchoring ring upwards beyond a top surface of the main part for attachment of a mast base ring of a windmill.

7. A windmill foundation according to any one of the preceding claims, wherein the main part comprises a substantially cylindrical lower part and a frustoconical upper part, the radial and tangential reinforcement structure extending both adjacent a bottom side of the lower part and adjacent a conical top surface of the upper part.

8. A windmill foundation according to claim 7, wherein the radial and tangential reinforcement structure also extends adjacent a circular upper surface of the frustoconical upper part.

9. A windmill foundation according to at least claim 7, wherein adjacent a circumferential wall of the lower part extending substantially vertically, U-shaped reinforcing brackets are present whose legs are located adjacent the reinforcement structure near the bottom side and adjacent the reinforcement structure near the conical upper surface, respectively, while the basis of the U-shape extends parallel to said circumferential edge.

10. A windmill foundation according to claim 6, wherein between the anchoring ring and the ends of the anchor bolts facing upwards, viewed in vertical direction of the main part, additional reinforcing brackets have been provided substantially in the center of the main part.
